# EUROPEAN PATENT APPLICATION

(11) **EP 3 103 602 A1**
(43) Date of publication of application: **14.12.2016**
(21) Application number: 15742759.2
(22) Date of filing: 29.01.2015
(51) Int. Cl.: B26D 1/24, B26D 1/06, B26D 1/36

(54) **APPARATUS FOR CUTTING SUPER ABSORBENT POLYMER AND METHOD FOR PREPARING SUPER ABSORBENT POLYMER USING SAME**

(30) Priority: 29.01.2014 KR 20140011500
(71) Applicant: Hanwha Chemical Corporation, Seoul 100-797 (KR)
(72) Inventor: SIM, Yu Jin, Daejeon 305-720 (KR); PAIK, Choong Hoon, Daejeon 305-720 (KR); KIM, Eui Duk, Daejeon 305-720 (KR); KIM, Ji Yeon, Dalseong-gun Daegu 711-765 (KR); OH, Seok Heon, Daejeon 305-720 (KR); LEE, Min Ho, Pohang-si Gyeongsangbuk-do 791-786 (KR); CHOI, Dae Keon, Jeonju-si Jeollabuk-do 560-792 (KR)
(74) Representative: Glawe, Delfs, Moll
(86) International application number: PCT/KR2015/000952
(87) International publication number: WO 2015/115821

(57) **Abstract**

The present invention relates to an apparatus for cutting a super absorbent polymer and a method for preparing a super absorbent polymer using the same. The apparatus for cutting a super absorbent polymer of the present invention comprises: an injection part for injecting a super absorbent polymer; a first cutter for primarily cutting the super absorbent polymer; a second cutter for secondarily cutting the super absorbent polymer; and a discharging part for discharging the cut super absorbent polymer.

## Description

### [Technical Field]

The present invention relates to an apparatus for cutting a super absorbent polymer and a method for preparing a super absorbent polymer using the same.

### [Background Art]

A super absorbent polymer (SAP) is a synthetic polymer material capable of absorbing approximately 500 to 1000 times its weight of water. The super absorbent polymer has been differently called a superabsorbency material (SAM), an absorbent gel material (AGM), etc. by different development enterprises. The super absorbent polymer disclosed above started to be commercialized for sanitary items, and is now being used widely as a water combination soil for horticulture, a water-stop material for civil engineering and construction, a nursery sheet, a freshness preservative in the food distribution field, a poultice material, and the like in addition to the sanitary fittings like a paper diaper for a child.

An inverse suspension polymerization method or an aqueous polymerization method is known as a method for preparing a super absorbent polymer. For example, inverse suspension polymerization is disclosed in Japanese Patent Publication Nos. sho 56-161408, sho 57-158209, and sho 57-198714. As the aqueous polymerization method, a thermal polymerization method of polymerizing an aqueous solution by applying heat to the aqueous solution and a photopolymerization method of polymerizing an aqueous solution by irradiating ultraviolet (UV) light to the aqueous solution are known.

Generally, a super absorbent polymer product is obtained from the processes of cutting and grinding after polymerization and then drying, crushing, and surface treatment classification. If an extruder or a kneader is used in the grinding process, a material to be ground may adhere to a rotating screw. Therefore, the material may be ground non-uniformly, thus reducing efficiency in the drying process.

In addition, if particles of the dried material are in the form of lumps, an additional grinding process is needed for the lumps. This causes generation of fine powder, which, in turn, degrades quality and causes a product loss.

To solve the above problems, it is required to cut the material before the grinding process and then put the cut material into a grinder.

### [Disclosure]

### [Technical Problem]

Aspects of the present invention provide an apparatus for cutting a super absorbent polymer to obtain uniformly ground pieces of the super absorbent polymer and a method for preparing a super absorbent polymer using the same.

However, aspects of the present invention are not restricted to the one set forth herein. The above and other aspects of the present invention will become more apparent to one of ordinary skill in the art to which the present invention pertains by referencing the detailed description of the present invention given below.

### [Technical Solution]

According to an exemplary embodiment of the invention to solve the technical problem, an apparatus for cutting a super absorbent polymer, the apparatus comprising: an injection part for injecting a super absorbent polymer; a first cutter for primarily cutting the super absorbent polymer; a second cutter for secondarily cutting the super absorbent polymer; and a discharging part for discharging the cut super absorbent polymer.

The super absorbent polymer may be sheet-shaped.

The first cutter may cut the super absorbent polymer in a direction parallel to a proceeding direction of the super absorbent polymer.

The first cutter may be a roller-type cutter.

The roller-type cutter may comprise a plurality of blades and rotates in the proceeding direction of the super absorbent polymer.

The apparatus may further comprise auxiliary blades or grooves which correspond to the blades with the super absorbent polymer interposed therebetween.

The second cutter may cut the super absorbent polymer in a direction perpendicular to the proceeding direction of the super absorbent polymer.

The second cutter may comprise a blade which makes a rectilinear reciprocating motion.

The apparatus may further comprise an auxiliary blade or a groove which corresponds to the blade of the second cutter with the super absorbent polymer interposed therebetween.

According to another exemplary embodiment of the invention to solve the technical problem, A method for preparing a super absorbent polymer, the method comprising: polymerizing a super absorbent polymer; injecting the super absorbent polymer to the injection part of the apparatus; cutting the super absorbent polymer using the first cutter and the second cutter; and discharging the cut super absorbent polymer.

The method may further comprising: drying the polymer discharged through the discharging part; and grinding the dried polymer.

Specific details of other embodiments are included in the detailed description and drawings.

### [Advantageous Effects]

Embodiments of the present invention provide at least one of the following advantages.

An apparatus for cutting a super absorbent polymer according to the present invention can provide a superior super absorbent polymer by reducing the load of a grinding process and the damage to a cross-linked polymerization ring due to over-grinding.

However, the effects of the present invention are not restricted to the one set forth herein.

### [Description of Drawings]

FIG. 1 is a schematic perspective view of an apparatus for cutting a super absorbent polymer according to an exemplary embodiment of the present invention;
FIG. 2 is a schematic cross-sectional view taken along the line A-A' of FIG. 1 according to an exemplary embodiment of the present invention;
FIG. 3 is a schematic cross-sectional view taken along the line B-B' of FIG. 1 according to an exemplary embodiment of the present invention; and
FIG. 4 is a schematic cross-sectional view taken along the line B-B' of FIG. 1 according to another exemplary embodiment of the present invention.

### [Best Mode]

Advantages and features of the present invention and methods of accomplishing the same may be understood more readily by reference to the following detailed description of exemplary embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification. In the drawings, sizes and relative sizes of layers and regions may be exaggerated for clarity.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present.

Spatially relative terms, such as "below", "beneath", "lower", "above", "upper", and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures.

It will be understood that, although the terms first, second, etc., may be used herein to describe various elements, these elements should not be limited by these terms. These terms are only used to distinguish one element from another element. Thus, a first element discussed below could be termed a second element without departing from the teachings of the present invention.

### Apparatus for cutting a super absorbent polymer

Hereinafter, embodiments of the present invention will be described with reference to the attached drawings.

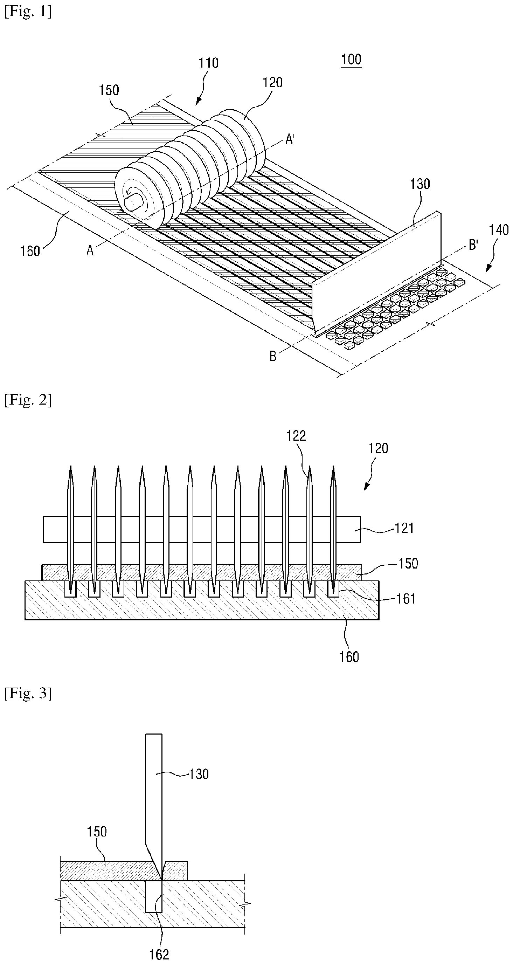

FIG. 1 is a schematic perspective view of an apparatus for cutting a super absorbent polymer according to an exemplary embodiment of the present invention. FIG. 2 is a schematic cross-sectional view taken along the line A-A' of FIG. 1 according to an exemplary embodiment of the present invention.

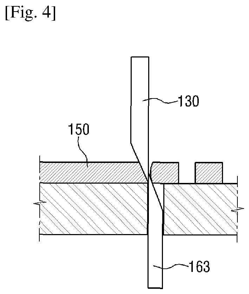

FIG. 3 is a schematic cross-sectional view taken along the line B-B' of FIG. 1 according to an exemplary embodiment of the present invention. FIG. 4 is a schematic cross-sectional view taken along the line B-B' of FIG. 1 according to another exemplary embodiment of the present invention.

Referring to these drawings, the apparatus 100 for cutting a super absorbent polymer includes an injection part 110 to which a super absorbent polymer 150 to be transferred on a support 160 is injected, a first cutter 120 which primarily cuts the super absorbent polymer 150 injected to the injection part 110, a second cutter 130 which secondarily cuts the primarily cut super absorbent polymer, and a discharging part 140 through which the cut super absorbent polymer is discharged.

The support 160 is not particularly limited but may consist of one conveyor belt or a combination of two or more conveyor belts in order to transfer the super absorbent polymer 150. When the support 160 consists of a combination of two or more conveyor belts, a connecting portion of the conveyor belts may correspond to the first cutter 120 and/or the second cutter 130.

The first cutter 120 may cut the super absorbent polymer 150 in a direction parallel to a proceeding direction of the super absorbent polymer 150. In this case, the first cutter 120 may be, for example, a roller-type cutter. In a specific example, the first cutter 120 may include a plurality of circular blades 122 and a pivot 121 which connects the circular blades 122. The pivot 121 is connected to a driver (not illustrated) to make a rotary motion. The rotary motion of the pivot 121 causes the circular blades 122 to rotate and thereby primarily cut the super absorbent polymer 150.

A gap between the circular blades 122 can vary according to process needs. For example, the gap may be set to, but is not limited to, a range of 5 to 100 mm. If the gap is less than 5 mm, it is too small. Accordingly, the super absorbent polymer 150 may be pushed by the circular blades 122. On the other hand, if the gap is more than 100 mm, it is difficult to obtain a desired effect from the cutting process.

In an exemplary embodiment, ends of the circular blades 122 may be saw-toothed. In this case, the saw teeth may lie in the same plane with the circular blades 122. However, the saw teeth can also lie off the above plane. When the saw teeth lie off the plane of the circular blades 122, two adjacent saw teeth may be disposed in different directions.

Grooves 161 may be formed at locations corresponding to the circular blades 122 such that the circular blades 122 can be partially inserted into the grooves 161 with the super absorbent polymer 150 interposed therebetween. In this case, defects caused by incomplete cutting of the super absorbent polymer 150 can be prevented, and a more definite cutting effect can be obtained.

In another example, auxiliary blades (not illustrated) which engage with the circular blades 122 with the super absorbent polymer 150 interposed therebetween may be formed at locations corresponding to the circular blades 122. In this case, the circular blades 122 and the auxiliary blades may cut the super absorbent polymer 150 in the same way as scissors.

The second cutter 130 may cut the super absorbent polymer 150 in a direction perpendicular to the proceeding direction of the super absorbent polymer 150. In this case, the second cutter 130 may include a blade which makes a rectilinear reciprocating motion. For example, the second cutter 130 may secondarily cut the super absorbent polymer 150 primarily cut by the first cutter 120 through its vertical rectilinear reciprocating motion.

A groove 162 may be formed at a location corresponding to the second cutter 130 such that the blade of the second cutter 130 can be partially inserted into the groove 162 with the super absorbent polymer 150 interposed therebetween. In this case, defects caused by incomplete cutting of the super absorbent polymer 150 can be prevented, and a more definite cutting effect can be obtained.

In another example, an auxiliary blade 163 which engages with the blade of the second cutter 130 with the super absorbent polymer 150 interposed therebetween may be formed at a location corresponding to the second cutter 130. In this case, the blade of the second cutter 122 and the auxiliary blade 163 may cut the super absorbent polymer 150 in the same way as scissors.

A secondary cutting gap can vary according to process needs. For example, the gap may be set to, but is not limited to, a range of 5 to 100 mm. If the cutting gap is less than 5 mm, it is too small for the super absorbent polymer 150 to be cut smoothly in the cutting process. On the other hand, if the cutting gap is more than 100 mm, it is difficult to obtain a desired effect from the cutting process.

The discharging part 140 may be an extension of the support 160 as shown in FIG. 1. However, the present invention is not limited thereto. That is, no extension of the support 160 may be provided, and the cut super absorbent polymer 150 may fall immediately from the support 160.

### Method for preparing a super absorbent polymer

A method for preparing a super absorbent polymer according to an embodiment of the present invention will now be described with reference to FIGS. 1 through 4.

The method for preparing a super absorbent polymer includes polymerizing a super absorbent polymer, injecting the polymerized super absorbent polymer 150 to the injection part 110 of the above-described apparatus 100 for cutting a super absorbent polymer, cutting the super absorbent polymer 150 using the first cutter 120 and the second cutter 130, and discharging the cut super absorbent polymer 150.

The polymerizing of the super absorbent polymer is not particularly limited. However, a monomer composition may be injected into a polymerizer and then polymerized. In this case, the monomer composition may be injected and polymerized on a belt in order to form a super absorbent polymer, but the present invention is not limited thereto.

Any monomer usually used to prepare a super absorbent polymer may be used as a water-soluble ethylene-based unsaturated monomer contained in the monomer composition. The monomer may be at least one selected from the group consisting of an anionic monomer and a salt thereof, a nonionic hydrophilic monomer, and an amino group-containing unsaturated monomer and a quaternary compound thereof.

In an exemplary embodiment, the monomer may be at least one anionic monomer, which is selected from the group consisting of acrylic acid, methacrylic acid, maleic anhydride, fumaric acid, crotonic acid, itaconic acid, 2-acryloylethane sulfonic acid, 2-methacryloylethane sulfonic acid, 2- (meth)acryloylpropane sulfonic acid and 2-(meth)acrylamide-2-methyl propane sulfonic acid, or a salt thereof; at least one nonionic hydrophilic monomer which is selected from the group consisting of (meth)acrylamide, N-substituted (meth)acrylate, 2-hydroxyethyl(meth)acrylate, 2- hydroxypropyl(meth)acrylate, methoxy polyethylene glycol (meth)acrylate and polyethylene glycol (meth)acrylate; or at least one amino group-containing unsaturated monomer, which is selected from the group consisting of (N,N)-dimethylaminoethyl(meth)acrylate and (N,N)- dimethylaminopropyl(meth)acrylamide, or a quaternary compound thereof.

The concentration of the water-soluble ethylene-based unsaturated monomer in the monomer composition may be determined in view of polymerization time and reaction conditions (such as the feeding speed of the monomer composition, the irradiation time, range and intensity of heat and or light, and the width, length and movement speed of the belt). In an exemplary embodiment, the concentration of the water-soluble ethylene-based unsaturated monomer may be in a range of 40 to 60% by weight. In this case, it may be efficient in terms of monomer solubility and economic feasibility.

The monomer composition may further include at least one additive selected from the group consisting of a photopolymerization initiator, a thermal polymerization initiator, and a crosslinking agent. The type of the polymerization initiator may be determined based on whether thermal polymerization, photopolymerization, or both thermal polymerization and photopolymerization will be used.

The photopolymerization initiator is not particularly limited but may be a single material or a mixture of two or more materials selected from the group consisting of, but is not limited to, an acetophenone derivative such as diethoxy acetophenone, 2-hydroxy-2-methyl-1-phenylpropane-1-on, 4-(2-hydroxy-ethoxy)phenyl-(2-hydroxy)-2-propyl ketone or 1-hydroxycyclohexyl phenyl ketone; a benzoin alkyl ether compound such as benzoin methyl ether, benzoin ethyl ether, benzoin isopropyl ether or benzoin isobutyl ether; a benzophenone derivative such as o-benzoyl methyl benzoate, 4-phenyl benzophenone, 4-benzoyl-4'-methyl-diphenyl sulfide or (4-benzoyl benzyl)trimethyl ammonium chloride; a thioxanthone compound; an acyl phosphine oxide derivative such as bis(2,4,6-trimethylbenzoyl)-phenyl phosphine oxide or diphenyl(2,4,6-trimethylbenzoyl)-phosphine oxide; and an azo compound such as 2-hydroxy methyl propionitrile or 2,2'-(azobis(2-methyl-N-(1,1-bis(hydroxyme-thyl)-2-hydroxyethyl)propionamide).

The thermal polymerization initiator is not particularly limited but may be a single initiator or a mixture of two or more initiators selected from the group consisting of, but not limited to, an azo-based initiator, a peroxide-based initiator, a redox-based initiator, and an organic halide. The thermal polymerization initiator may also be, but is not limited to, sodium persulfate (Na₂S₂O₈) or potassium persulfate (K₂S₂O₈).

Each of the photopolymerization initiator and the thermal polymerization initiator can be added in the monomer composition in any amount as long as it can bring about a polymerization initiating effect. In an exemplary embodiment, the photopolymerization initiator may be added in an amount of, but not limited to, 0.005 to 0.1 parts by weight based on 100 parts by weight of monomer, and the thermal polymerization initiator may be added in an amount of, but not limited to, 0.01 to 0.5 parts by weight based on 100 parts by weight of monomer.

The crosslinking agent may be a crosslinking agent containing at least one functional group that can react with a substituent of a monomer and at least one ethylene unsaturated group or a crosslinking agent containing two or more functional groups that can react with a substituent of a monomer and/or a substituent formed by hydrolyzing the monomer.

In an exemplary embodiment, the crosslinking agent may be bisacrylamide having a carbon number of 8 to 12, bismethacrylamide having a carbon number of 8 to 12, poly(meth)acrylate of polyol having a carbon number of 2 to 10, or poly(meth)allyl ether of polyol having a carbon number of 2 to 10. More specifically, the crosslinking agent may be a single material or a mixture of two or more materials selected from the group consisting of, but not limited to, N,N'-methylenebis (meth)acrylate, ethylene oxy(meth)acrylate, polyethylene oxy(meth)acrylate, propylene oxy (meth)acrylate, glycerin diacrylate, glycerin triacrylate, trimethylol triacrylate, tri-allylamine, triallyl cyanurate, triallyl isocyanate, polyethylene glycol, diethylene glycol, and propylene glycol.

The crosslinking agent can be added in the monomer composition in any amount as long as it can bring about a crosslinking effect. In an exemplary embodiment, the crosslinking agent may be added in an amount of, but not limited to, 0.01 to 0.5 parts by weight based on 100 parts by weight of monomer.

The polymerized super absorbent polymer 150 may be injected to the injection part 110 of the cutting apparatus 100 and then cut by the first cutter 120 and the second cutter 130.

In this case, the first cutter 120 may primarily cut the super absorbent polymer 150 in the direction (lengthwise direction) parallel to the proceeding direction of the super absorbent polymer 150, and the second cutter 130 may secondarily cut the primarily cut super absorbent polymer 150 in the direction (widthwise direction) perpendicular to the proceeding direction of the super absorbent polymer 150. Alternatively, the first cutter 120 may primarily cut the super absorbent polymer 150 in the widthwise direction, and the second cutter 130 may secondarily cut the super absorbent polymer 150 in the lengthwise direction.

The cut super absorbent polymer 150 may be discharged through the discharging part 140. The discharged super absorbent polymer 150 may be ground and dried, and then the dried polymer may be ground again. In some cases, a pre-drying process may be performed before the grinding process in order to prevent clumping in the grinding process.

A grinding method used here is not limited to a particular method. For example, a device for cutting and extruding a rubber elastomer may be used. In an exemplary embodiment, the grinding method may be, but is not limited to, a typical cutter, a chopper-type cutter, a kneader-type cutter, a vibration grinder, an impact grinder, or a friction grinder.

As a drying method, a conventional dryer and a heating furnace may be used. In an exemplary embodiment, the drying method may be, but is not limited to, a hot-air dryer, a fluidized bed dryer, a flash dryer, a UV dryer, or a dielectric-heat dryer. A drying temperature is not particularly limited but may be in a range of 100 to 200 °C in order for prevention of thermal degradation and efficient drying.

While the present invention has been particularly shown and described with reference to exemplary embodiments thereof, it will be understood by those of ordinary skill in the art that various changes in form and detail may be made therein without departing from the spirit and scope of the present invention as defined by the following claims. The exemplary embodiments should be considered in a descriptive sense only and not for purposes of limitation.

## Claims

1. An apparatus for cutting a super absorbent polymer, the apparatus comprising:
an injection part for injecting a super absorbent polymer;
a first cutter for primarily cutting the super absorbent polymer;
a second cutter for secondarily cutting the super absorbent polymer; and
a discharging part for discharging the cut super absorbent polymer.

2. The apparatus of claim 1, wherein the super absorbent polymer is sheet-shaped.

3. The apparatus of claim 1, wherein the first cutter cuts the super absorbent polymer in a direction parallel to a proceeding direction of the super absorbent polymer.

4. The apparatus of claim 3, wherein the first cutter is a roller-type cutter.

5. The apparatus of claim 4, wherein the roller-type cutter comprises a plurality of blades and rotates in the proceeding direction of the super absorbent polymer.

6. The apparatus of claim 5, further comprising auxiliary blades or grooves which correspond to the blades with the super absorbent polymer interposed therebetween.

7. The apparatus of claim 1, wherein the second cutter cuts the super absorbent polymer in a direction perpendicular to the proceeding direction of the super absorbent polymer.

8. The apparatus of claim 1, wherein the second cutter comprises a blade which makes a rectilinear reciprocating motion.

9. The apparatus of claim 8, further comprising an auxiliary blade or a groove which corresponds to the blade of the second cutter with the super absorbent polymer interposed therebetween.

10. A method for preparing a super absorbent polymer, the method comprising:
polymerizing a super absorbent polymer;
injecting the super absorbent polymer to the injection part of the apparatus of any one of claims 1 through 9;
cutting the super absorbent polymer using the first cutter and the second cutter; and
discharging the cut super absorbent polymer.

11. The method of claim 10, further comprising:
drying the polymer discharged through the discharging part; and
grinding the dried polymer.
